# DEMANDE DE BREVET EUROPEEN

(11) **EP 1 155 944 A1**
(43) Date de publication de la demande: **21.11.2001**
(21) Numéro de dépôt: 01401280.1
(22) Date de dépôt: 16.05.2001
(51) Int. Cl.: B62D 25/14, B62D 29/00

(54) **Tableau de bord, module de tableau de bord correspondant, et son procédé de fabrication**

(30) Priorité: 18.05.2000 FR 0006393
(71) Demandeur: Faurecia Industries, 92100 Boulogne-Billancourt (FR)
(72) Inventeur: Lyonnet, Christophe, 25200 Montbeliard (FR); Query, Pascal, 70200 Ronchamp (FR); Vuillemin, Guy, 25110 Baume-les-Dames (FR)
(74) Mandataire: Jacobson, Claude

(57) **Abrégé**

Ce tableau de bord pour véhicule automobile comporte une âme (4) en mousse de matière plastique, comprenant des évidements formant des conduits d'air (12), et un revêtement (20) comprenant un mat de fibres (22) incorporé dans une couche de résine polymène (24). Le revêtement est un revêtement de rigidification (20) entourant complètement le pourtour de la section transversale de l'âme (4) sur au moins une partie de longueur de celle-ci.

## Description

La présente invention concerne un tableau de bord pour véhicule automobile du type comportant une âme en mousse de matière plastique, constituée de plusieurs âmes partielles, comprenant des évidements formant des conduits d'air ou des emplacements de composants, et comportant un revêtement comprenant un mat de fibres incorporé dans une couche de résine polymère.

Elle concerne en outre un procédé pour la fabrication d'un tel tableau.

Dans l'état de la technique on connaît des tableaux de bord pour véhicule automobile constitués d'une âme en mousse de polypropylène qui est réalisée à partir de différentes âmes partielles assemblées ensemble. Les âmes partielles sont reliées les unes aux autres par exemple par collage. L'âme peut être revêtue d'une peau de décoration. Un tel tableau de bord est proposé par exemple par le document DE-A-44 23 108. Ce tableau de bord a l'inconvénient de présenter une rigidité faible.

On connaît en outre, par le document GB-A-2 335 396, un tableau de bord comprenant une barre transversale en métal qui est entourée d'un corps en mousse de matière plastique. La barre transversale sert de support pour le corps. Le corps n'est revêtu que sur sa surface visible par une coquille de mat de verre trempé de matière thermoplastique. Le tableau de bord connu par ce document est lourd à cause de la barre transversale, et la rigidité du tableau dépend essentiellement de cette barre.

La présente invention a pour but de pallier ces inconvénients et de proposer un tableau de bord qui soit rigide et qui ait un faible coût de fabrication.

A cet effet l'invention a pour objet un tableau de bord pour véhicule automobile du type précité, caractérisé en ce que le revêtement est un revêtement de rigidification entourant complètement le pourtour de la section transversale de l'âme sur au moins une partie de longueur de celle-ci.

L'invention a également pour objet un module de tableau de bord comprenant un tableau de bord tel que défini ci-dessus, et au moins un équipement fixé à celui-ci.

Le module selon l'invention peut comporter un module de sac gonflable monté dans l'évidement, ce module ayant un couvercle intégré. Il peut comporter en outre un module de sac gonflable et un couvercle rapporté qui recouvre l'ouverture arrière de l'évidement et qui est fixé sur le pourtour de cet évidement.

L'invention a en outre pour objet un procédé de fabrication d'un tableau de bord tel que défini ci-dessus caractérisé en ce que
- on assemble des âmes partielles en mousse de matière plastique en une âme ;
- on revêt l'âme d'un mat de fibres, de façon à ce que le pourtour de la section transversale de l'âme soit complètement entouré du mat de fibres;
- on place l'âme revêtue dans un moule ;
- on injecte de la résine polymère dans le moule de façon à ce que le mat de fibres soit complètement incorporé dans une couche de résine polymère;
- on laisse durcir la résine polymère et on démoule le tableau de bord ; et
- on découpe des ouvertures pour les conduites d'aération et/ou des emplacements de composants.

En variante, le procédé peut comporter les étapes suivantes :
- on assemble des âmes partielles en mousse de matière plastique en une âme ;
- on place des pièces préformées de mat de fibres de forme sensiblement complémentaire de l'âme dans la matrice et/ou le poinçon d'un moule, les pièces préformées ayant une surface totale complètement recouvrant l'âme;
- on place l'âme dans le moule ;
- on injecte de la résine polymère dans le moule de façon à ce que le mat de fibres soit complètement incorporé dans une couche de résine polymère;
- on laisse durcir la résine polymère et on démoule le tableau de bord ; et
- on découpe des ouvertures pour les conduites d'aération et/ou des emplacements de composants

Suivant des modes particuliers de réalisation le procédé peut comporter en outre les étapes suivantes :
- placer avant l'injection de la résine polymère, des éléments de fixation sur des éléments de maintien temporaire disposés dans le moule.
- disposer des pièces de mat de fibres sur les éléments de maintien temporaire disposés dans le moule avant la mise en place des éléments de fixation.
- placer une peau de décoration dans le moule, et d'injecter de la résine polymère sur la face de la peau de décoration s'appliquant contre le tableau de bord.

L'invention sera mieux comprise à la lecture de la description qui va suivre, donnée uniquement à titre d'exemple et faite en se référant aux dessins annexés, sur lesquels :
- la figure 1 est une vue en coupe transversale d'un tableau de bord selon l'invention à l'emplacement du conducteur ;
- la figure 1A représente à plus grande échelle le détail 1A de la figure 1 ;
- la figure 2 est une vue en coupe transversale du tableau de bord de la figure 1 dans la zone centrale entre la zone conducteur et la zone passager ;
- la figure 3A est une vue en coupe transversale du tableau de bord de la figure 1 dans la zone passager.
- les figures 3B et 3C sont des vues correspondantes à la figure 3A des variantes d'un tableau de bord selon l'invention.

Le tableau de bord 2 représenté sur les dessins est destiné à être installé dans un véhicule automobile schématisé par un tablier de véhicule 3.

Les expressions « avant » et « arrière » seront utilisées dans ce qui suit par rapport au véhicule.

Le tableau de bord 2 comprend une âme 4 en mousse de matière plastique qui est constituée de plusieurs âmes partielles 6,8,10. Les âmes partielles 6,8,10 sont reliées les unes aux autres, par des moyens mécaniques ou par collage. Elles comportent des évidements qui forment, à l'état assemblé, des conduits d'air 12, 14 et un logement 16 pour des instruments.

Le tableau de bord 2 comprend en outre un revêtement de rigidification 20 comprenant un mat de fibres 22 incorporé dans une couche constituée d'une résine thermodurcissable 24. Ce revêtement de rigidification 20 recouvre sensiblement toute la surface de l'âme 4 afin de garantir une rigidité suffisante. Notamment les sections transversales dépourvues d'ouvertures sont revêtues sur tout le pourtour. Le revêtement de rigidification 20 a avantageusement une épaisseur comprise entre 2mm et 6mm, afin de garantir une rigidité suffisante. Le mat de fibres 22 peut être par exemple un mat de fibres de verre, de feutre, ou de tout autre matériau approprié.

La partie visible du tableau de bord 2 est revêtue d'une peau de décoration 26 connue en soi, par exemple en cuir,en matière plastique, ou en tissu. Cette peau de décoration 26 est collée sur le tableau de bord 2 par la résine thermodurcissable 24,lors de la coulée ou de l'injection.

En variante, elle peut être également collée après coup sur le tableau de bord 2.

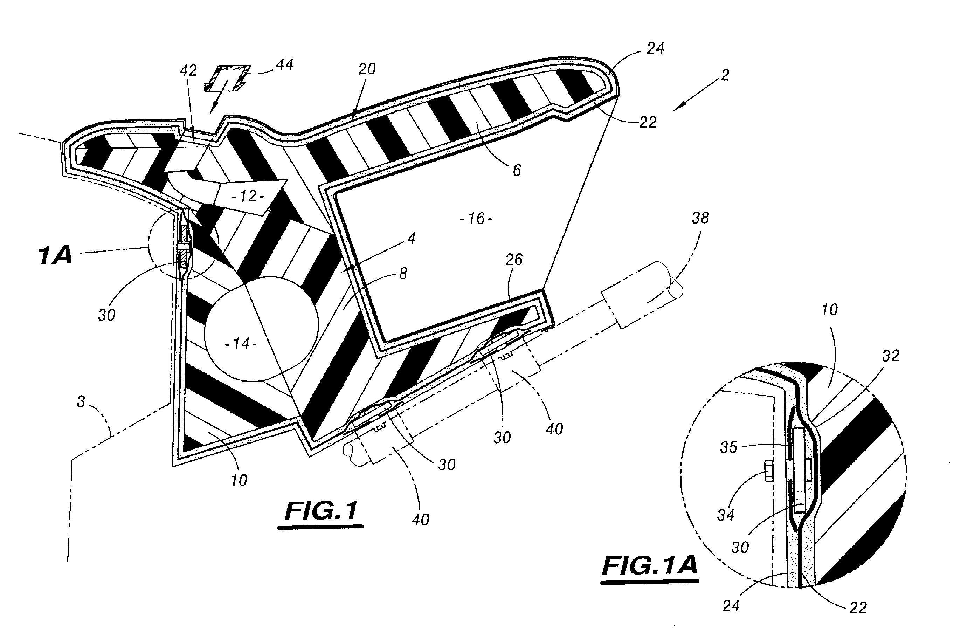

Afin de rendre possible le montage du tableau de bord 2 sur le véhicule ou le montage des composants sur le tableau de bord, des inserts de fixation 30 sont fixés sur le tableau de bord 2 (voir Figure 1A). L'âme 4 comporte à cet effet des parties en creux 32 recevant les inserts de fixation 30.

Les inserts sont par exemple des disques en métal comprenant un taraudage central 34. Les inserts de fixation 30 sont, à l'exception de l'ouverture du taraudage 34, entourés par de la résine thermodurcissable. Afin de garantir une bonne solidarisation des inserts de fixation 30 avec la résine thermodurcissable 24, ils sont recouverts de pièces de mat de fibres 35 qui font saillie au-delà des bords des inserts 30.

Des inserts de fixation 30 sont prévus pour fixer le tableau de bord 2 sur le tablier du véhicule 3 qui est indiqué schématiquement sur la figure 1.

Deux autres inserts 30 sont prévus sur la partie inférieure du tableau de bord 2. Une colonne de direction 38 est vissée sur ces inserts, par exemple par l'intermédiaire d'étriers de fixation 40 ou par d'autres moyens mécaniques.

Des inserts expansés peuvent être ajoutés dans des trous réalisés par perçage de la peau résine pour fixer différents accessoires (voir l'insert expansé 88 décrit plus loin) .

Le tableau de bord 2 comporte en outre une ouverture de sortie 42 du conduit d'air 12. Elle reçoit une buse de dégivrage 44 connue en soi, et fixée par exemple par encliquetage.

L'ouverture 42 est fermée par une section faible venue de matière de l'âme partielle 6 avant le revêtement avec de la résine thermodurcissable, afin d'empêcher un bouchage du conduit 12. L'ouverture de sortie 42 est découpée après-coup dans la peau de décoration 26, dans le revêtement 20 et dans la section faible de l'âme partielle 6.

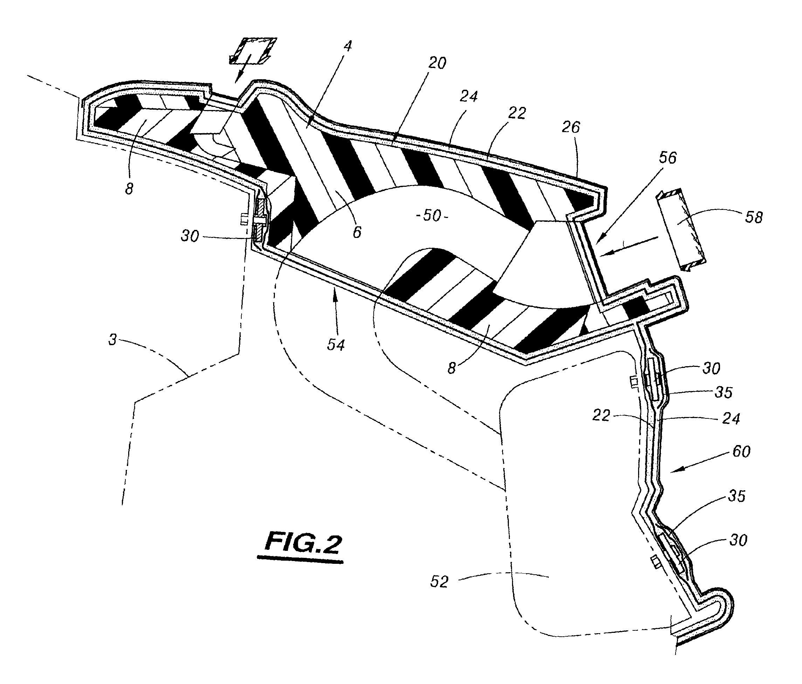

Sur la figure 2 on a représenté une section transversale de la partie centrale du tableau de bord 2.

On voit que le tableau de bord 2 comporte dans son âme 4 une conduite centrale 50 d'aération munie d'une ouverture d'entrée 54 qui est reliée, à l'état monté, à un dispositif de climatisation ou de chauffage 52. Cette conduite 50 comporte sur son ouverture de sortie 56 également un emplacement pour un aérateur 58. La description de l'ouverture 42 s'applique de façon analogue aux ouvertures 54, 56.

On voit en outre que sur la partie basse et arrière du tableau de bord 2, une paroi libre 60 s'étend vers le bas. Cette paroi libre 60 est formée d'un seul tenant avec le revêtement 20 et est constituée d'un prolongement du mat de fibres 22 revêtant l'âme du tableau de bord 2, également noyée dans de la résine thermodurcissable 24. Cette paroi a également de préférence une épaisseur comprise entre 2mm et 6 mm.

Des inserts de fixation 30 sont incorporés dans la résine thermodurcissable 24 de la paroi libre 60 et sont ainsi fixés sur celle-ci. Ces inserts 30 servent à fixer la climatisation ou le chauffage 52 à l'emplacement formé par la paroi 60 de la partie inférieure du tableau de bord ou d'autres accessoires.

Il est à noter que, avantageusement, sur les parois libres le mat de fibres 22 recouvre les inserts de fixation 30 du côté de sollicitation de ces inserts par des efforts, c'est-à-dire du côté avant sur la figure 2. L'autre côté des inserts de fixation 30 de la paroi libre 60 est également recouvert d'une pièce de mat de fibres 35.

La face arrière de la paroi libre 60 est revêtue de la peau de décoration 26.

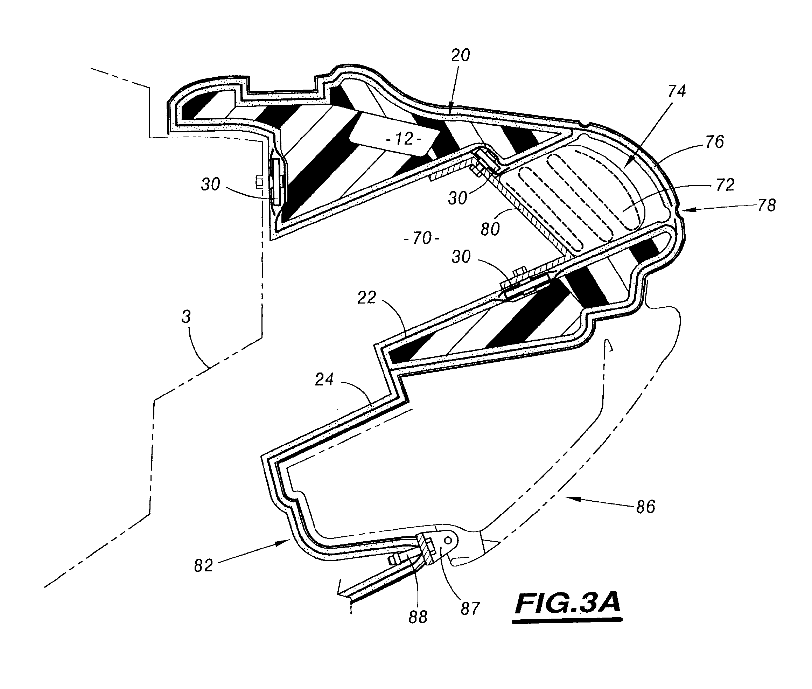

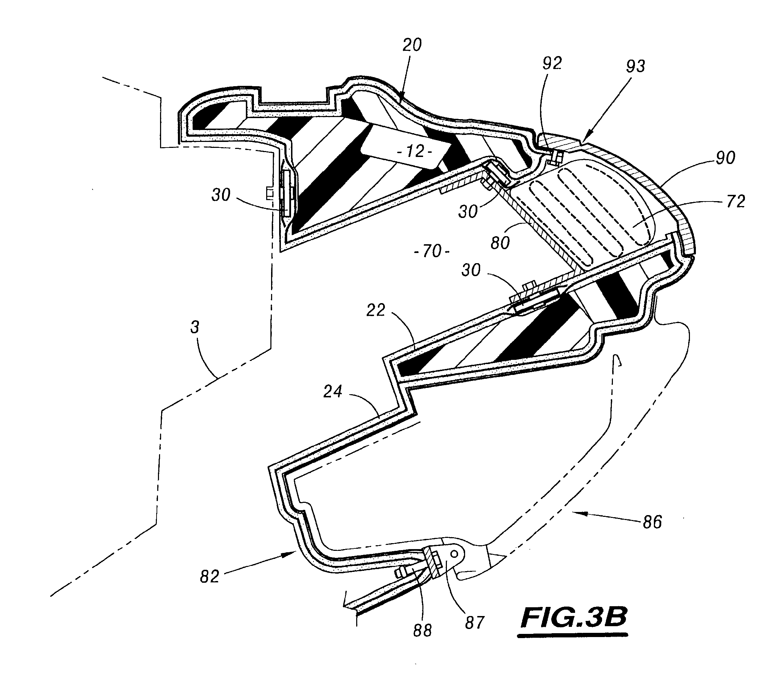

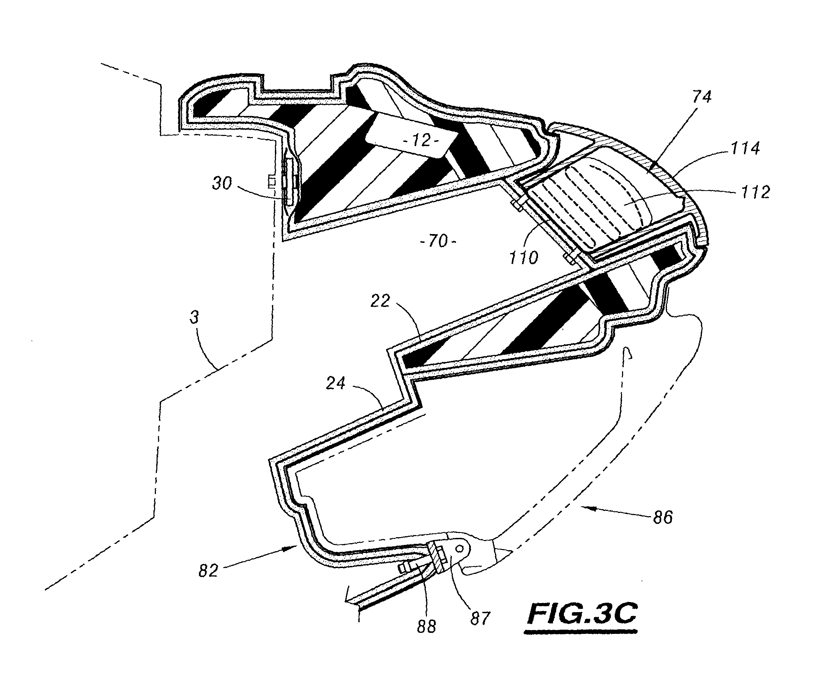

Sur la figure 3, on a représenté la section transversale de la partie passager du tableau de bord 2.

L'âme 4 du tableau de bord 2 comporte à cet emplacement un évidement 70 qui traverse toute sa section transversale, et qui forme un logement pour un module de sac gonflable 72 connu en soi. Le pourtour de cet évidement 70 est également complètement revêtu du revêtement de rigidification 20. L'ouverture arrière 74 de l'évidement 70 est recouverte par une paroi 76 formée par du mat de fibres 22 et de la résine thermodurcissable 24. Il est à noter que cette paroi 76 est fabriquée d'un seul tenant avec le reste du revêtement de rigidification 20. Cependant, le mat de fibres 22 est interrompu sur au moins une partie du pourtour 78 de l'ouverture arrière 74, et l'épaisseur de la paroi 76 est diminuée sur ce pourtour, afin de former une ligne destinée à la rupture pour le sac gonflable.

Le module de sac gonflable 72 est fixé devant cette paroi 76 par un étrier de fixation 80 qui coopère avec des inserts de fixation 30 incorporés dans le revêtement 20 de l'évidement 70 de la même manière que précédemment.

En variante, l'étrier de fixation 80 peut être fixé directement sur le revêtement par des vis ou des ergots d'encliquetage.

Cette section du tableau de bord 2 comporte également une paroi libre 82 formant un logement 84 pour la réception d'un module de vide-poches 86 indiqué schématiquement. Le module de vide-poches 86 est articulé sur la paroi libre par l'intermédiaire d'une charnière 87. Cette charnière 87 est fixée sur la paroi 82 par un insert expansé 88 connu en soi, qui traverse un perçage ménagé dans cette paroi.

Le tableau de bord 2 selon l'invention est fabriqué de la façon suivante.

En premier, on fabrique les âmes partielles 6,8,10 en mousse de matière plastique, par exemple en polystyrène expansé. On les assemble par des moyens mécaniques ou par collage et l'on obtient ainsi l'âme 4 du tableau de bord.

Ensuite, on revêt l'âme 4 du mat de fibres 22, de façon à ce que le pourtour de la section transversale de l'âme 4 soit complètement entouré, et à ce que des parties libres subsistent, destinées à former les parois libres 60, 82. L'évidement 70 de réception de sac gonflable est également revêtu du mat de fibres 22.

En variante, des préformes de mat de fibres peuvent être installés sur la matrice et le poinçon du moule avant introduction de l'âme 4 dans celui-ci.

A l'étape suivante, on met les pièces de mat de fibres 35 sur des éléments de maintien temporaires, par exemple des tiges filetées amovibles prévues dans un moule. Ces tiges filetées se trouvent aux emplacements des inserts de fixation 30. Ensuite, on visse les inserts de fixation sur les tiges filetées.

Ensuite, on place l'âme 4 revêtue dans le moule dans lequel on a préalablement installé la peau décor en fond de moule. Les parties libres du mat de fibres 22 sont posées librement dans des emplacements correspondants du moule.

En variante, elles peuvent être tenues dans la position souhaitée par rapport à l'âme 4 par des moyens de maintien périphérique.

Ensuite, après fermeture du moule, on injecte de la résine thermodurcissable dans le moule de façon à ce que le mat de fibres 22 soit complètement enrobé dans de celle-ci, et à ce que la peau de décoration 26 soit collée sur le tableau de bord 2.

Après le durcissement de la résine 24, on dévisse les tiges filetées des inserts 30, et on démoule le tableau de bord 2.

Enfin, le tableau de bord 2 est fini par découpage des ouvertures 42,54,56 des conduites d'aération, par la mise en place des buses d'aération 44,58 et par l'installation des composants tels que le chauffage/la climatisation 52.

En variante, on peut injecter de la résine thermodurcissable sur la surface de la peau de décoration afin d'aider à la répartition de la résine dans des zones du tableau de bord recouvertes par cette peau de décoration.

En variante, on peut aussi injecter de la résine thermodurcissable sur la surface de la peau de décoration, ensuite on place l'âme 4 revêtue de mat de fibres dans le moule, puis on ferme le moule et on injecte de nouveau de la résine thermodurcissable afin que le mat de fibres soit complètement enrobé de celle-ci et ceci dans le cas de pièce de forme complexe.

Le fait qu'une grande partie du pourtour de la section transversale de l'âme 4 en mousse plastique est revêtue d'une coquille dure constituée de la résine thermodurcissable renforcée du mat de fibres confère au tableau de bord une rigidité suffisante.

En conséquence, toute barre de rigidification en métal peut être omise de sorte que le tableau de bord est un tableau de bord autoporteur. En variante, on peut bien entendu incorporer au tableau de bord une barre métallique, laquelle peut alors être légère.

De plus, étant donné que des parois libres peuvent être fabriquées en une seule opération avec le revêtement du tableau de bord, celui-ci a un faible coût de fabrication.

Grâce au fait que le tableau de bord utilise un revêtement de résine thermodurcissable, celui-ci peut être fabriqué par injection à pression basse. En conséquence, les investissements nécessaires en outillages sont faibles.

Sur les Figures 3B et 3C, on voit des variantes du tableau de bord selon l'invention. Le tableau de bord de la Figure 3B comporte un évidement 70 qui traverse toute sa section transversale.

La partie formant couvercle 76 du tableau de bord selon la Figure 3A est remplacée par un couvercle rapporté 90. Le couvercle 90 est vissé sur sa partie supérieure sur un rebord 92 du revêtement 20.

Le couvercle 90 comporte une rainure d'affaiblissement 93 horizontale dans cette partie supérieure, cette rainure formant charnière lors du déclenchement du sac gonflable.

Le tableau de bord de la Figure 3C comprend une paroi 110 constituée de mat de fibres 22 et de résine 24 qui recouvre la section transversale de l'évidement 70 sensiblement au milieu de cet évidement et qui remplace l'étrier de fixation 80.

Un module de sac gonflable 112 à couvercle intégré 114 est fixé dans la partie arrière de l'évidement 70 par vissage à travers cette paroi 110.

## Revendications

1. Tableau de bord pour véhicule automobile du type comportant une âme (4) en mousse de matière plastique, constituée de plusieurs âmes partielles (6,8,10), comprenant des évidements formant des conduits d'air (12) ou des emplacements de composants (16), et comportant un revêtement (20) comprenant un mat de fibres (22) incorporé dans une couche de résine polymère (24), **caractérisé en ce que** le revêtement est un revêtement de rigidification (20) entourant complètement le pourtour de la section transversale de l'âme (4) sur au moins une partie de longueur de celle-ci.

2. Tableau de bord selon la revendication 1, **caractérisé en ce que** la résine polymère est une résine thermodurcissable (24).

3. Tableau de bord selon la revendication 1 ou la revendication 2, **caractérisé en ce qu'**il comprend au moins une paroi libre (60,82 ;110) venue de matière avec le revêtement de rigidification (20), et constituée du mat de fibres (22)incorporé dans une couche de résine polymère (24).

4. Tableau de bord selon l'une quelconque des revendications 1 à 3, **caractérisé en ce qu'**il comprend en outre au moins un élément de fixation (30) du tableau de bord (2) sur le véhicule (3) ou de fixation de composants (38,86) sur le tableau de bord (2), et **en ce que** l'élément de fixation est moulé dans la résine polymère (24).

5. Tableau de bord selon la revendication 4, **caractérisé en ce que** l'élément de fixation (30) est entouré d'un côté du mat de fibres (22), et d'autre côté d'une pièce de mat de fibres (35) qui fait saillie au-delà des bords de l'élément de fixation (30).

6. Tableau de bord selon la revendication 5, **caractérisé en ce que** l'élément de fixation (30) est entouré du mat de fibres (22) sur le côté sollicité par une force à l'état monté.

7. Tableau de bord selon l'une quelconque des revendications précédentes, **caractérisé en ce qu'**une peau de décoration (26), notamment en cuir ou en matière plastique, est fixée sur les parties visibles du tableau de bord (2), à l'état monté, par la résine polymère (24).

8. Tableau de bord selon l'une quelconque des revendications précédentes, **caractérisé en ce qu** 'il comprend un évidement (70) ménagé dans l'âme (4), pour un module de sac gonflable (72 ; 112).

9. Tableau de bord selon la revendication 3 et la revendication 8 prises ensembles, **caractérisé en ce que** le tableau de bord comprend une paroi libre (110) qui recouvre la section transversale de l'évidement (70), à un emplacement sensiblement à distance de l'ouverture arrière de cet évidement, cette paroi libre (110) étant destinée à la fixation du module de sac gonflable.

10. Tableau de bord selon la revendication 8, **caractérisé en ce que** l'évidement (70) traverse l'âme (4).

11. Tableau de bord selon la revendication 10, **caractérisé en ce qu'**il est recouvert sur son ouverture arrière par une partie (76) du revêtement de rigidification (20), et **en ce que** le revêtement de rigidification comporte une zone d'affaiblissement (78) destinée à la rupture lors d'un déclenchement du sac gonflable, cette zone d'affaiblissement(78) étant formée par une section transversale affaiblie du revêtement de rigidification (20) et dépourvue de mat de fibres (22).

12. Tableau de bord selon l'une quelconque des revendications précédentes, **caractérisé en ce que** la couche de résine polymère a une épaisseur comprise entre 2 mm et 6 mm.

13. Tableau de bord selon l'une quelconque des revendications précédentes, **caractérisé en ce que** le tableau de bord est un tableau de bord (2) autoporteur.

14. Module de tableau de bord comprenant un tableau de bord selon l'une quelconque des revendications 1 à 13, et au moins un équipement (52) fixé à celui-ci.

15. Module de tableau de bord selon la revendication 14 comprenant un tableau de bord selon l'une des revendications 8 à 10 ou l'une des revendications qui en dépendent, **caractérisé en ce qu'**il comprend en outre un module de sac gonflable (112) monté dans l'évidement (70), ce module de sac gonflable ayant un couvercle intégré (114).

16. Module de tableau de bord selon la revendication 14 comprenant un tableau de bord selon l'une des revendications 8 à 10 ou l'une des revendications qui en dépendent, **caractérisé en ce qu'**il comporte en outre un module de sac gonflable (72) et un couvercle rapporté (90) qui recouvre l'ouverture arrière de l'évidement (70) et qui est fixé sur le pourtour de cet évidement (70).

17. Procédé de fabrication d'un tableau de bord selon l'une quelconque des revendications 1 à 13 comprenant les étapes suivantes :
- on assemble des âmes partielles (6,8,10) en mousse de matière plastique en une âme (4);
- on revêt l'âme (4) d'un mat de fibres (22), de façon à ce que le pourtour de la section transversale de l'âme (4) soit complètement entouré du mat de fibres (22) ;
- on place l'âme (4) revêtue dans un moule ;
- on injecte de la résine polymère dans le moule de façon à ce que le mat de fibres (22) soit complètement incorporé dans une couche de résine polymère;
- on laisse durcir la résine polymère et on démoule le tableau de bord ; et
- on découpe des ouvertures pour les conduites d'aération et/ou des emplacements de composants.

18. Procédé de fabrication d'un tableau de bord selon l'une quelconque des revendications 1 à 13 comprenant les étapes suivantes :
- on assemble des âmes partielles (6,8,10) en mousse de matière plastique en une âme (4);
- on place des pièces préformées de mat de fibres de forme sensiblement complémentaire de l'âme (4) dans la matrice et/ou le poinçon d'un moule, les pièces préformées ayant une surface totale complètement recouvrant l'âme (4) ;
- on place l'âme (4) dans le moule ;
- on injecte de la résine polymère dans le moule de façon à ce que le mat de fibres soit complètement incorporé dans une couche de résine polymère;
- on laisse durcir la résine polymère et on démoule le tableau de bord ; et
- on découpe des ouvertures pour les conduites d'aération et/ou des emplacements de composants.

19. Procédé de fabrication selon la revendication 17 ou 18 d'un tableau de bord (2) selon la revendication 4 ou l'une des revendications dépendantes de la revendication 4, **caractérisé en ce qu'**il comprend en outre l'étape de placer avant l'injection de la résine polymère, des éléments de fixation (30) sur des éléments de maintien temporaire disposés dans le moule.

20. Procédé de fabrication selon la revendication 19 d'un tableau de bord selon la revendication 5 ou l'une des revendications dépendantes de la revendication 5, **caractérisé en ce qu'**il comprend en outre l'étape de disposer des pièces de mat de fibres (35) sur les éléments de maintien temporaire disposés dans le moule avant la mise en place des éléments de fixation (30).

21. Procédé de fabrication selon l'une des revendications 17 à 20 d'un tableau de bord selon la revendication 7 ou l'une des revendications dépendantes de la revendication 7, **caractérisé en ce qu'**il comprend en outre les étapes de placer une peau de décoration (26) dans le moule, et d'injecter de la résine polymère sur la face de la peau de décoration (26) s'appliquant contre le tableau de bord.
